Europäisches Patentamt

**European Patent Office**

Office européen des brevets

(19)

(11) Publication number: **0 030 599**
**B1**

(12) # EUROPEAN PATENT SPECIFICATION

(45) Date of publication of patent specification: **16.03.83**

(21) Application number: **80106391.8**

(22) Date of filing: **21.10.80**

(51) Int. Cl.³: **C 09 K 5/06, C 01 F 5/38, C 01 F 5/30**

(54) **Hydrated magnesium nitrate/magnesium chloride reversible phase change compositions and their preparation.**

(30) Priority: **02.11.79 US 90803**

(43) Date of publication of application:
**24.06.81 Bulletin 81/25**

(45) Publication of the grant of the patent:
**16.03.83 Bulletin 83/11**

(84) Designated Contracting States:
**BE CH DE FR GB IT LI NL SE**

(56) References cited:
**AT - B - 322 504**
**DE - A - 2 844 810**
**FR - A - 1 050 933**
**GB - A - 1 500 245**

(73) Proprietor: **THE DOW CHEMICAL COMPANY**
**Dow Center 2030 Abbott Road Post Office Box 1967**
**Midland Michigan 48640 (US)**

(72) Inventor: **Lane, George Ashel**
**3802 Wintergreen Drive**
**Midland Michigan (US)**
Inventor: **Rossow, Harold Everett**
**2888 Poseyville Road**
**Midland Michigan (US)**

(74) Representative: **Hann, Michael, Dr. et al,**
**Marburger Strasse 38**
**D-6300 Giessen (DE)**

Courier Press, Leamington Spa, England

# Hydrated magnesium nitrate/magnesium chloride reversible phase change compositions and their preparation

The invention relates to reversible liquid/solid phase change compositions. More particularly the invention relates to hydrated $Mg(NO_3)_2/MgCl_2$ phase change compositions containing nucleating additives to modify the supercooling properties of the $Mg(NO_3)_2/MgCl_2$ liquid phase.

$Mg(NO_3)_2 \cdot 6H_2O/MgCl_2 \cdot 6H_2O$ eutectic undergoes a phase transition at about 59°C releasing or alternately absorbing a substantial quantity of latent heat of fusion. As such, the material has advantageous properties for use as an encapsulated heat storage medium for use in conjunction with solar energy systems for space or water heating applications. The material is particularly highlighted for such use by Yoneda and Takanashi "EUTECTIC MIXTURES FOR SOLAR HEAT STORAGE", Solar Energy, No. 21, pp. 61—63. In order to improve the material for such applications, however, there is a need to develop additives or a series of additives to modify the supercooling properties of hydrated $Mg(NO_3)_2/MgCl_2$ compositions, and most advantageously, additives which are highly effective in a very small amount.

Hydrated $Mg(NO_3)_2/MgCl_2$ means reversible liquid/solid phase change compositions which, exclusive of any additives or impurities, contains in admixture from 25—45 weight percent $Mg(NO_3)_2$, from 10—25 weight percent $MgCl_2$, and from 40—50 weight percent water (to 100 weight percent). Most preferred is a eutectic mixture having a melt/freeze temperature of about 59°C, and prepared by admixing 34 weight percent $Mg(NO_3)_2$ and 19 weight percent $MgCl_2$ in 47 weight percent water. The predominant crystal form in compositions of the invention is the hexahydrate.

"Supercooling" refers to a discrepancy between the temperature at which freezing initiates and the thawing temperature of a given hydrated $Mg(NO_3)_2/MgCl_2$ composition, when cooled and heated under quiet conditions.

"Additive(s)" includes in addition to the nucleating additives specified herein, precursors of such additives which are non-detrimental to the purposes of the invention.

The invention is the discovery of a new class of highly active nucleating additives for hydrated $Mg(NO_3)_2/MgCl_2$ compositions. The invention particularly is a composition comprising hydrated $Mg(NO_3)_2/MgCl_2$, and which includes as a nucleating additive one or more of MgO, $Mg(OH)_2$, $CoSO_4$, $CuSO_4$, $MgSO_4$, $NiSO_4$, $CaK_2(SO_4)_2$, and $NaBO_2$ (Metaborat) added in an amount effective to suppress the supercooling properties of the hydrated $Mg(NO_3)_2/MgCl_2$ liquid phase, and preferably in an amount not exceeding about 5.0 weight percent of the weight of the phase change composition. A sufficient amount of the additive(s) is present in the preferred practice to suppress supercooling to no greater than 5°C, and preferably no greater than 2°C, taken on an averaging basis over repeated cycles.

The invention comprises a reversible liquid/solid phase change composition comprising hydrated $Mg(NO_3)_2/MgCl_2$ and as a nucleating additive, one or more of MgO, $CoSO_4$, $CuSO_4$, $MgSO_4$, $NiSO_4$, $CaK_2(SO_4)_2$, $Mg(OH)_2$, $NaBO_2$, (Metaborat), said nucleating additive being added to the composition to suppress average supercooling of the $Mg(NO_3)_2/MgCl_2$ liquid phase to about 5°C or less.

The invention also resides in a method of preparing a hydrated $Mg(NO_3)_2/MgCl_2$ composition of suppressed supercooling properties, comprising admixing uniformly in such composition, one or more of MgO, $Mg(OH)_2$, $CoSO_4$, $CuSO_4$, $MgSO_4$, $NiSO_4$, $CaK_2(SO_4)_2$ and $NaBO_2$, (Metaborat) to suppress average supercooling of the $Mg(NO_3)_2/MgCl_2$ liquid phase to 5°C, or less.

determined by testing a given composition over repetitive phase change cycles. A given nucleating additive, if present in an insufficient amount may, for example, exhibit only temporary effectiveness. Such behavior is overcome by adding slightly greater amounts of that given additive.

The compositions hereof are ideally packaged in individual encapsulating means for use in conjunction with solar heating systems. Exemplary of suitable and known encapsulating means for the heat storage compositions herein described, are water impervious foils of plastics/metal laminates. Also, closed cell plastic foams have been suggested in which the heat storage composition may be encapsulated within the cells of the foam structure, as illustrated, for example, in U.S. Patent No. 4,003,426. Yet other useful encapsulating means are metal or plastic containers such as inexpensive aerosol cans; metal or plastic pipe, such as extruded polyethylene pipe; and the like. Further details respecting such encapsulating means are given in Report Nos. ORO/5217—8 and NSF RANN SE C906 FR76 1, both available from the National Technical Information Service, Springfield, Virginia.

### Example

The data of the Table below are generated by preparing hydrated $Mg(NO_3)_2/MgCl_2$ samples according to the respective amounts indicated, and wherein each of the mixed samples is placed into a two-ounce glass vial, which is then heated to above 70°C under agitation to achieve a uniform dispersion or admixture. A glass-encased thermocouple is inserted through the cap of each vial to measure temperature changes at the center of each sample prior to, during and after freezing. The cooling temperature is controlled and maintained within the range of 20—25°C (room temperature). Sample No. 1, below, is a control sample of analytical grade $Mg(NO_3)_2/MgCl_2$.

TABLE

| Sample No. | Composition | No. of Cycles | Additive | | Average Supercooling Ave. °C |
|---|---|---|---|---|---|
| | | | Material | wt.% | |
| 1 | 58.7% $Mg(NO_3)_2 \cdot 6H_2O$ + 41.3% $MgCl_2 \cdot 6H_2O$ | 5 | None | — | 11.8 |
| 2 | " | 5 | $NaBO_2$ (Metaborat) | 0.5 | 2.0 |
| 3 | " | 5 | $CoSO_4$ | 0.5 | 4.4 |
| 4 | " | 5 | $CuSO_4$ | 0.5 | 4.4 |
| 5 | " | 5 | $MgSO_4$ | 0.5 | 4.4 |
| 6 | " | 5 | $NiSO_4$ | 0.5 | 4.8 |
| 7 | " | 10 | $Mg(OH)_2$ | 0.5 | 1.5 |
| 8 | " | 10 | MgO | 0.5 | 1.4 |
| 9 | " | 10 | $CaK_2(SO_4)_2$ | 0.5 | 5.0 |

While the data illustrates that very little of the additives produce marked benefits (average supercooling less than 5°C) such additives of course, may be incorporated in larger amounts, but preferably would not exceed the amount of 5.0 weight percent of the weight of the phase change composition. Preferably, the amount of the additive is from 0.02 to 2.0 weight percent, and most preferably from 0.05 to 0.5 weight percent, of the weight of the phase change composition.

**Claims**

1. A reversible liquid/solid phase change composition comprising hydrated $Mg(NO_3)_2/MgCl_2$ and as a nucleating additive, one or more of MgO, $CoSO_4$, $CuSO_4$, $MgSO_4$, $NiSO_4$, $CaK_2(SO_4)_2$, $Mg(OH)_2$, $NaBO_2$, (Metaborat), said nucleating additive being added to the composition to suppress average supercooling of the $Mg(NO_3)_2MgCl_2$ liquid phase to 5°C, or less.

2. The composition of Claim 1 having added thereto one or more of the nucleating additives to suppress average supercooling of the $Mg(NO_3)_2/MgCl_2$ liquid phase to 2°C, or less.

3. The composition of Claim 1 or 2, wherein the hydrated $Mg(NO_3)_2/MgCl_2$ consists of 34 weight percent $Mg(NO_3)_2$ and 19 weight percent $MgCl_2$ in 47 weight percent water.

4. The composition of Claim 1, 2 or 3 hermetically contained within encapsulating means.

5. The composition of any one of Claims 1 to 4 wherein the nucleating additive is present in an amount not greater than 5.0 weight percent of the weight of the phase change composition.

6. The composition of Claim 5 wherein the nucleating additive is present in an amount of from 0.02 to 2.0 weight percent of the weight of the phase change composition.

7. The composition of Claim 5 wherein the nucleating additive is present in an amount of from 0.05 to 0.5 weight percent of the weight of the composition.

8. A method of preparing a hydrated $Mg(NO_3)_2/MgCl_2$ composition of suppressed supercooling properties, comprising admixing uniformly in such composition, one or more of MgO, $Mg(OH)_2$, $CoSO_4$, $CuSO_4$, $MgSO_4$, $NiSO_4$, $CaK_2(SO_4)_2$ and $NaBO_2$, (Metaborat) to suppress average supercooling of the $Mg(NO_3)_2/MgCl_2$ liquid phase to 5°C, or less.

9. The method of Claim 8 including the step of adding one or more of the nucleating additives to suppress average supercooling of the $Mg(NO_3)_2/MgCl_2$ liqid phase to 2°C, or less.

10. The method of Claim 8 or 9, wherein the hydrated $Mg(NO_3)_2/MgCl_2$ mixture is prepared by mixing about 34 weight percent $Mg(NO_3)_2$ and about 19 weight percent $MgCl_2$ in about 47 weight percent water.

11. The method of Claim 8, 9 or 10, including the step of adding the nucleating 0,05 à 0,5% en poids du poids de la composition.

additive in an amount not greater than 5.0 weight percent of the weight of the phase change composition.

12. The method of Claim 11, including the step of adding the nucleating additive in an amount of from 0.02 to 2.0 weight percent of the weight of the phase change composition.

13. The method of Claim 11, including the step of adding the nucleating additive in an amount of from 0.05 to 0.5 weight percent of the weight of the phase change composition.

## Patentansprüche

1. Zusammensetzung, deren Phasenzustand reversibel zwischen fest und flüssig umkehrbar ist, enthaltend $Mg(NO_3)_2/MgCl_2$-Hydrat und $MgO$, $CoSO_4$, $CuSO_4$, $MgSO_4$, $NiSO_4$, $CaK_2(SO_4)_2$, $Mg(OH)_2$, $NaBO_2$ (Metaborat) oder eine Mischung davon als Kristallisation fördernder Zusatz, wobei der die Kristallisation fördernde Zusatz der Zusammensetzung zugesetzt wird um die mittlere Unterkühlung der flüssigen Phase von $Mg(NO_3)_2/MgCl_2$ auf 5°C oder weniger zu verringern.

2. Zusammensetzung nach Anspruch 1 enthaltend einen oder mehrere Kristallisation fördernde Zusätze um die mittlere Unterkühlung der flüssigen Phase von $Mg(NO_3)_2/MgCl_2$ auf 2°C oder weniger zu verringern.

3. Zusammensetzung nach Ansprüchen 1 oder 2, dadurch gekennzeichnet, daß das $Mg(NO_3)_2/MgCl_2$-Hydrat aus 34 Gewichtsprozent $Mg(NO_3)_2$ und 19 Gewichtsprozent $MgCl_2$ in 47 Gewichtsprozent Wasser besteht.

4. Zusammensetzung nach Ansprüchen 1, 2 oder 3, dadurch gekennzeichnet, daß sie in einschließende Mittel hermetisch eingekapselt ist.

5. Zusammensetzung nach Ansprüchen 1 bis 4, dadurch gekennzeichnet, daß sie nicht mehr als 5 Gewichtsprozent, bezogen auf das Gesamtgewicht der Zusammensetzung, Kristallisation fördernden Zusatz enthält.

6. Zusammensetzung nach Anspruch 5, dadurch gekennzeichnet, daß sie 0,02 bis 2,0 Gewichtsprozent bezogen auf das Gesamtgewicht der Zusammensetzung Kristallisation fördernden Zusatz enthält.

7. Zusammensetzung nach Anspruch 5, dadurch gekennzeichnet, daß sie 0,05 bis 0,5 Gewichtsprozent, bezogen auf das Gesamtgewicht der Zusammensetzung, Kristallisation fördernden Zusatz enthält.

8. Verfahren zur Herstellung einer Zusammensetzung aus $Mg(NO_3)_2/MgCl_2$-Hydrat mit verringerter Neigung zur Unterkühlung, gekennzeichnet durch gleichmäßiges Einmischen von $MgO$, $Mg(OH)_2$, $CoSO_4$, $CuSO_4$, $MgSO_4$, $NiSO_4$, $CaK_2(SO_4)_2$, $NaBO_2$ (Metaborat) oder einer Mischung davon um die mittlere Unterkühlung der flüssigen Phase von $Mg(NO_3)_2/MgCl_2$ auf 5°C oder weniger zu verringern.

9. Verfahren nach Anspruch 8, dadurch gekennzeichnet, daß man ihr einen oder mehrere Kristallisation fördernde Zusätze zufügt um die mittlere Unterkühlung der flüssigen Phase von $Mg(NO_3)_2/MgCl_2$ auf 2°C oder weniger zu verringern.

10. Verfahren nach Ansprüchen 8 oder 9, dadurch gekennzeichnet, daß amn die Mischung aus $Mg(NO_3)_2/MgCl_2$-Hydrat herstellt durch Mischen von etwa 34 Gewichtsprozent $Mg(NO_3)_2$, etwa 19 Gewichtsprozent $MgCl_2$ in etwa 47 Gewichtsprozent Wasser.

11. Verfahren nach Ansprüchen 8, 9 oder 10, dadurch gekennzeichnet, daß man der Zusammensetzung nicht mehr als 5 Gewichtsprozent, bezogen auf das Gesamtgewicht der Zusammensetzung, Kristallisation fördernden Zusatz zusetzt.

12. Verfahren nach Anspruch 11, dadurch gekennzeichnet, daß man der Zusammensetzung 0,02 bis 2,0 Gewichtsprozent, bezogen auf das Gesamtgewicht der Zusammensetzung, Kristallisation fördernden Zusatz zusetzt.

13. Verfahren nach Anspruch 11, dadurch gekennzeichnet, daß man der Zusammensetzung 0,05 bis 0,5 Gewichtsprozent, bezogen auf das Gesamtgewicht der Zusammensetzung, Kristallisation fördernden Zusatz zusetzt.

## Revendications

1. Une composition susceptible de changement réversible de phase liquide/solide comprenant $Mg(NO_3)_2/MgCl_2$ hydraté et, comme additif de nucléation, l'un parmi $MgO$, $CoSO_4$, $CuSO_4$, $MgSO_4$, $NiSO_4$, $CaK_2(SO_4)_2$, $Mg(OH)_2$, $NaBO_2$ (métaborate), ledit additif de nucléation étant ajouté à la composition pour réduire la surfusion moyenne de la phase liquide $Mg(NO_3)_2/MgCl_2$ à 5°C, ou moins.

2. La composition selon la revendication 1 à laquelle a été ajouté au moins l'un des additifs de nucléation pour réduire la surfusion moyenne de la phase liquide $Mg(NO_3)_2/MgCl_2$ à 2°C, ou moins.

3. La composition selon la revendication 1 ou 2, caractérisée par le fait que $Mg(NO_3)_2/MgCl_2$ hydraté consiste en 34% en poids de $Mg(NO_3)_2$ et 19% en poids de $MgCl_2$ dans 47% en poids d'eau.

4. La composition selon la revendication 1, 2 ou 3 continue hermétiquement dans des moyens d'encapsulage.

5. La composition selon l'une des revendications 1 à 4, caractérisée par le fait que l'additif de nucléation est présent en une quantité n'excédant pas 5,0% en poids du poids de la compositon susceptible de changement de phase.

6. La composition selon la revendication 5, caractérisée par le fait que l'additif de nucléation est présent en une quantité allant de 0,02 à 2,0% en poids du poids de la composition susceptible de changement de phase.

7. La composition selon la revendication 5, caractérisée par le fait que l'additif de nucléation est présent en une quantité allant de

8. Un procédé de préparation d'une composition à base de $Mg(NO_3)_2/MgCl_2$ hydraté dont les propriétés de surfusion ont été réduites, comprenant l'étape consistant à mélanger uniformément, dans cette composition, au moins l'un parmi $MgO$, $Mg(OH)_2$, $CoSO_2$, $CuSO_4$, $MgSO_4$, $NiSO_4$, $CaK_2(SO_4)_2$ et $NaBO_2$ (méta-borate), pour réduire la surfusion moyenne de la phase liquide $Mg(NO_3)_2/MgCl_2$, à 5°C ou moins.

9. Le procédé selon la revendication 8 incluant l'étape consistant à ajouter au moins l'un des additifs de nucléation pour réduire la surfusion moyenne de la phase liquide $Mg(NO_3)_2/MgCl_2$, à 2°C, ou moins.

10. Le procédé selon la revendication 8 ou 9, caractérisé par le fait que le mélange $Mg(NO_3)_2/MgCl_2$ hydraté est préparé par mélange d'environ 34% en poids de $Mg(NO_3)_2$ et d'environ 19% en poids de $MgCl_2$ dans environ 47% en poids d'eau.

11. Le procédé selon la revendication 8, 9 ou 10 incluant l'étape consistant à ajouter l'additif de nucléation en une quantité n'excédant pas 5,0% en poids du poids de la composition susceptible de changement de phase.

12. Le procédé selon la revendication 11 incluant l'étape consistant à ajouter l'additif de nucléation en une quantité allant, de 0,02 à 2,0% en poids du poids de la composition susceptible de changement de phase.

13. Le procédé selon la revendication 11 incluant l'étape consistant à ajouter l'additif de nucléation en une quantité de 0,05 à 0,5% en poids du poids de la composition susceptible de changement de phase.